# DEMANDE DE BREVET EUROPEEN

(11) **EP 0 721 875 A1**
(43) Date de publication de la demande: **17.07.1996**
(21) Numéro de dépôt: 96400033.5
(22) Date de dépôt: 05.01.1996
(51) Int. Cl.: B62D 1/16

(54) **Ensemble de colonne de direction réglable en position pour véhicule automobile**

(30) Priorité: 12.01.1995 FR 9500319
(71) Demandeur: ECIA - EQUIPEMENTS ET COMPOSANTS POUR L'INDUSTRIE AUTOMOBILE, F-25400 Audincourt (FR)
(72) Inventeur: Deschamps, Laurent, F-90160 Bessoncourt (FR); Courvoisier, Patrick, F-25600 Vieux-Charmont (FR); Salez, Jean-Philippe, F-25700 Valentigney (FR)
(74) Mandataire: Habasque, Etienne Joel Jean-François

(57) **Abrégé**

Cet ensemble, comportant un corps de colonne de direction (2) dans lequel est monté rotatif un arbre de direction, ce corps étant monté déplaçable entre des flasques d'une structure de fixation de celui-ci sur le reste de la structure du véhicule et comportant à une extrémité, des moyens de montage entre les flasques, associés à des moyens de blocage du corps en position, déplaçables entre une position de verrouillage et une position de déverrouillage, est caractérisé en ce que les moyens de montage du corps (2) entre les flasques de la structure de fixation sont formés par une portion (8) de celui-ci venue de matière avec le reste de celui-ci et munie de surfaces de contact opposées et parallèles (9,10), adaptées pour coopérer avec les flasques de la structure de fixation.

## Description

La présente invention concerne un ensemble de colonne de direction réglable en position notamment pour véhicule automobile.

On connaît déjà dans l'état de la technique, un certain nombre d'ensembles de colonne de direction de ce type, qui comportent un corps de colonne de direction dans lequel est monté rotatif un arbre de direction, dont une extrémité est adaptée pour recevoir un volant de direction et dont l'autre extrémité est adaptée pour être reliée au reste du mécanisme de direction du véhicule.

Ce corps est monté déplaçable entre des flasques d'une structure de fixation de celui-ci sur le reste de la structure du véhicule et comporte à proximité de l'une de ses extrémités, des moyens de guidage entre les flasques de la structure de fixation et à l'autre de ses extrémités, des moyens de montage entre les flasques de la structure, ces moyens de montage et ces flasques étant associés à des moyens de blocage du corps en position, déplaçables entre des positions de verrouillage et de déverrouillage.

En position de verrouillage, ces moyens de blocage permettent d'immobiliser le corps par serrage de celui-ci entre les flasques de la structure de fixation tandis qu'en position de déverrouillage, ce corps est déplaçable par exemple angulairement et/ou axialement par rapport à la structure de fixation pour permettre par exemple un réglage de position de celui-ci par rapport à la structure de fixation.

Dans l'état de la technique, ces moyens de montage comprennent par exemple un collier disposé autour du corps et fixé sur celui-ci par exemple par l'intermédiaire de cordons de soudure ou autres.

On conçoit que cette structure présente un certain nombre d'inconvénients notamment au niveau de son coût de fabrication, car elle nécessite la réalisation d'une pièce spécifique et de moyens de fixation de cette pièce sur le corps.

Le but de l'invention est donc de résoudre ces problèmes.

A cet effet, l'invention a pour objet un ensemble de colonne de direction réglable en position notamment pour véhicule automobile, du type comportant un corps de colonne de direction dans lequel est monté rotatif un arbre de direction, ce corps étant monté déplaçable entre des flasques d'une structure de fixation de celui-ci sur le reste de la structure du véhicule et comportant à une extrémité, des moyens de montage entre les flasques, associés à des moyens de blocage du corps en position, déplaçables entre une position de verrouillage et une position de déverrouillage, caractérisé en ce que les moyens de montage du corps entre les flasques de la structure de fixation sont formés par une portion de celui-ci venue de matière avec le reste de celui-ci et munie de surfaces de contact opposées et parallèles, adaptées pour coopérer avec les flasques de la structure de fixation.

L'invention sera mieux comprise à la lecture de la description qui va suivre, donnée uniquement à titre d'exemple et faite en se référant aux dessins annexés, sur lesquels :
- la Fig.1 représente une vue schématique de côté d'un ensemble de colonne de direction selon l'invention; et
- les Figs.2 et 3 représentent des vues partielles de côté et de face respectivement d'un corps de colonne entrant dans la constitution d'un ensemble de colonne selon l'invention.

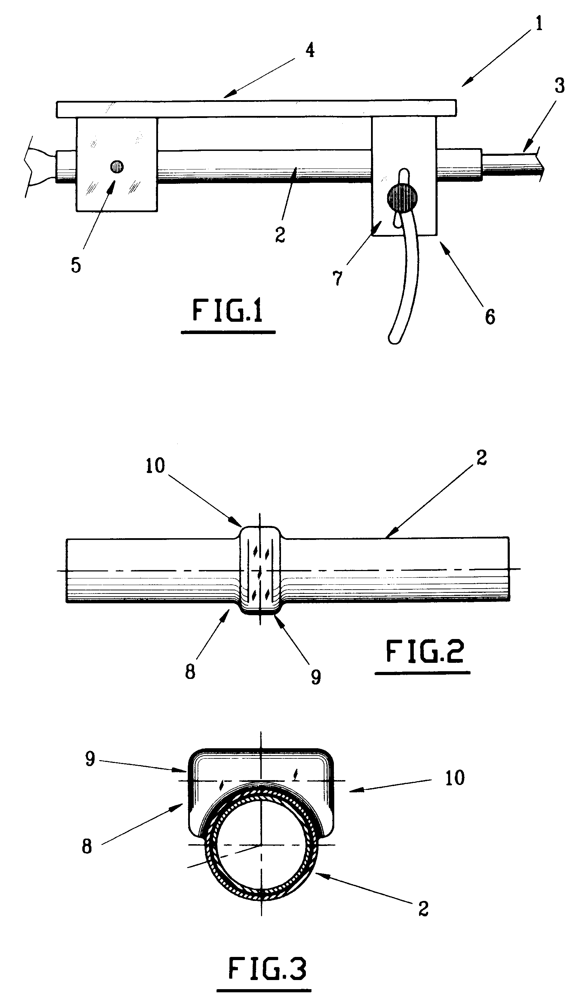

On reconnaît sur cette figure 1, un ensemble de colonne de direction réglable en position, notamment pour véhicule automobile, désigné par la référence générale 1.

Cet ensemble de colonne comporte un corps de colonne de direction désigné par la référence générale 2 dans lequel est monté rotatif un arbre de direction 3.

De façon classique, l'une des extrémités de l'arbre de direction 3 est adaptée pour recevoir un volant de direction, tandis que l'autre extrémité de celui-ci est adaptée pour être reliée au reste du mécanisme de direction du véhicule.

Ce corps est monté déplaçable entre des flasques d'une structure de fixation désignée par la référence générale 4 permettant de fixer celui-ci sur le reste de la structure du véhicule de façon classique.

Dans l'exemple de réalisation décrit, ce corps comporte à l'une de ses extrémités, par exemple 5, des moyens de guidage tels qu'un palier de guidage de cette extrémité de corps entre les flasques de la structure de fixation et à l'autre de ses extrémités par exemple 6, des moyens de montage entre les flasques de la structure, ces moyens de montage et ces flasques étant associés à des moyens 7 de blocage du corps en position dans la structure de fixation.

Bien entendu, l'extrémité 5 du corps peut être fixée sur le reste de la structure de fixation ou du véhicule par des moyens autres qu'un palier de guidage, tels que par exemple des ferrures de fixation de celui-ci directement sur la structure du véhicule.

Les moyens de blocage sont montés déplaçables entre une position de verrouillage et une position de déverrouillage.

Comme cela est connu, en position de verrouillage, les moyens de blocage permettent d'immobiliser le corps en position par serrage de celui-ci entre les flasques de la structure, tandis qu'en position de déverrouillage, ces moyens autorisent un déplacement du corps par rapport à la structure de fixation pour permettre le réglage de la position de cet ensemble par rapport à cette structure.

Dans l'état de la technique, ces moyens de montage du corps 5 entre les flasques comprennent un collier engagé autour du corps 2 de colonne de direction et fixé celui-ci par exemple par l'intermédiaire de cordons de soudure.

Selon l'invention et comme on peut le voir sur les figures 2 et 3, ces moyens de montage du corps entre les flasques de la structure de fixation sont formés par une portion de celui-ci venue de matière avec le reste du corps et désignée par la référence générale 8 sur cette figure.

Avantageusement, cette portion de corps 8 est munie de surfaces de contact opposées ou parallèles, désignées par les références 9 et 10 adaptées pour coopérer avec les flasques correspondants de la structure de fixation.

Différents modes de réalisation et procédés de fabrication de ce corps peuvent être envisagés.

C'est ainsi par exemple que celui-ci peut être réalisé par roulage et sertissage ou soudage d'un flan de tôle, les moyens de montage venus de matière avec ce corps étant formés d'une seule pièce avec celui-ci par exemple par hydroformage ou lors de l'opération de roulage par exemple de ce flan de tôle.

## Revendications

1. Ensemble de colonne de direction réglable en position notamment pour véhicule automobile, du type comportant un corps de colonne de direction (2) dans lequel est monté rotatif un arbre de direction (3), ce corps étant monté déplaçable entre des flasques d'une structure de fixation (4) de celui-ci sur le reste de la structure du véhicule et comportant à une extrémité, des moyens de montage entre les flasques, associés à des moyens (7) de blocage du corps en position, déplaçables entre une position de verrouillage et une position de déverrouillage, caractérisé en ce que les moyens (8) de montage du corps entre les flasques de la structure de fixation sont formés par une portion (8) de celui-ci venue de matière avec le reste de celui-ci et munie de surfaces de contact opposées et parallèles (9,10), adaptées pour coopérer avec les flasques de la structure de fixation.

2. Ensemble selon la revendication 1, caractérisé en ce que le corps est formé par roulage d'un flan de tôle.

3. Ensemble selon la revendication 1, caractérisé en ce que les moyens de montage sont formés par hydroformage.
